# EUROPEAN PATENT SPECIFICATION

(11) **EP 0 519 856 B1**
(45) Date of publication and mention of the grant of the patent: **24.04.1996**
(21) Application number: 92500071.3
(22) Date of filing: 11.06.1992
(51) Int. Cl.: E04D 3/08, F16B 21/08, F16B 5/06, E04B 2/96

(54) **Structure for the watertight assembly of plates on roofs and the like**
Wasserdichte Montagebauweise für Dachplatten und dgl.
Structure pour l'assemblage étanche de panneaux de toiture et similaire

(30) Priority: 14.06.1991 ES 9101429; 11.11.1991 ES 9102491; 05.06.1992 ES 9201165
(43) Date of publication of application: 23.12.1992
(73) Proprietor: Periz Corominas, Manuel, E-08018 Barcelona (ES)
(72) Inventor: Periz Corominas, Manuel, E-08018 Barcelona (ES)
(74) Representative: Ponti Sales, Adelaida

(56) References cited:
- BE-A- 887 755
- DE-A- 3 527 211
- FR-A- 2 160 192
- FR-A- 2 166 802
- GB-A- 821 902
- GB-A- 2 181 179
- US-A- 4 524 494
- US-A- 4 672 784

## Description

The present invention refers to a structure according to the preamble of claim 1 for the watertight assembly of plates on roofs and the like, provided with means for securing of said plates to the structure, which simplifies and speeds up the operations involved in assembly of the roof.

More specifically, the present invention relates to the securing pieces which join a cover-like member and a rib-like member, on which are fixed the edges of the plates which constitute the roof, with interposition of the corresponding watertight seals, trapped between the aforesaid cover-like member and the rib.

### BACKGROUND OF THE INVENTION

Known in the art are structures for the watertight assembly of plates on roofs and the like which basically comprise rigid members in the form of ribs, one of the larger sides of which is covered by an elastic shape which constitutes a watertight seal and is provided on its outer side with elastic lips or other similar arrangement, against which rest under pressure, forming a watertight closure, the edges of the adjacent plates, said plates being trapped by another rigid member in the form of cover, bearing elastic shapes or joint weatherstrips to form a watertight seal, which rest against the aforesaid plates, the entire assembly being secured by means of bolts which link the covers to the respective ribs, between which are interposed the edges of the roof plates with the watertight seals described.

Practice has shown that considerable time is needed to join the members which constitute the ribs of the structure and the respective covers by means of bolts, and this delays the execution and assembly of the roof and makes it more expensive.

Spanish patent No. 9001927 refers to a structure of the type described above, provided with means of securement which notably simplify the linkage between the cover-like member and the member which constitutes the rib, between which are clamped the edges of the roof plates.

These means of linkage, provided for in patent No. 9001927, include a jut so configured that it can be secured, on the condition that it can turn 90° around its axis, into a longitudinal opening provided on the ribs. These securing pieces also have projecting lugs provided at their free ends with fins to be secured under pressure within a box provided in one of the sides of the cover-like shape.

In the versions envisaged in said patent, the lugs adopt inclined positions diverging from each other, while the teeth are oriented laterally in opposite directions, for their securing within the box provided in the cover-like shape. This being a highly repetitive operation, the teeth configuration injured the assemblers' fingers.

This embodiment calls for the existence of a box in the cover-like member, adapted to the position of the teeth on the lugs.

In the Spanish patent No. 9001927 quoted as an antecedent, supporting members in the form of ribs are described, with a longitudinal opening in the centre, for securing to same of pieces which link the cover-like member with the rib-like member. The presence of this longitudinal opening weakens the rib-like members and makes it more difficult to curve and bend them, and further leads to deformation of the members in the process of curving or bending.

Belgian Patent Application No. 887.755 discloses an elevation piece in a structure for greenhouses, that is useful for changing existing thin panels and substitute them with thicker, more insulating panels.

FR-2.166.802 describes a device for supporting glass plates in which the lower part of a securing strip has the shape of an arrowhead allowing a non-reversible assembly of the panels on a lower supporting element.

US-A-4.672.784 discloses a wall framing system provided with panels supported by a plurality of vertical and horizontal mullions and having the features of the preamble of present claim 1.

### DESCRIPTION OF THE INVENTION

In order to facilitate utilization of a type of cover-like member, provided with a means of securing the pieces other than a box, a structure has been designed which is provided with securing pieces and cover-like member, different from those described in patent No. 9001927. Furthermore, the structure in question presents ribs which are stronger than those known.

The structure in question is characterized as described in claim 1.

### BRIEF DESCRIPTION OF THE DRAWINGS

For a better understanding of all that is described in the present specification, some drawings are attached which, only by way of example, show a practical case of embodiment of the present invention.

In said drawings,
figure 1 is an exploded perspective view of the structure components;
figure 2 is a cross-section view of said components assembled in working position;
figure 3 is a front elevation detail of the securing end of the piece which links the cover-like member with the rib;
figure 4 is a view similar to the previous one, but with the securing piece in working position;
figure 5 is a view similar to that of figure 4, but with the piece attached to a rib of greater thickness;
figure 6 is a longitudinal section view of the assembled structure, according to a version different from that of the previous figure;
figure 7 is a perspective view of a securing piece different from the previous ones;
figure 8 is a cross-section view of the securing piece of figure 7 in working position;
figure 9 is a perspective view of a securing piece on which its extensions and elastic wings have a form different to those of the piece shown in figure 7;
figure 10 is a view similar to that of figure 8, but corresponding to the securing jut shown in figure 9;
figure 11 is a view similar to that of figures 7 and 9, according to a third version of the securing jut;
figure 12 is a cross section of the jut shown in figure 11; and figure 13 shows another embodiment of the jut.

### DESCRIPTION OF A PREFERRED EMBODIMENT

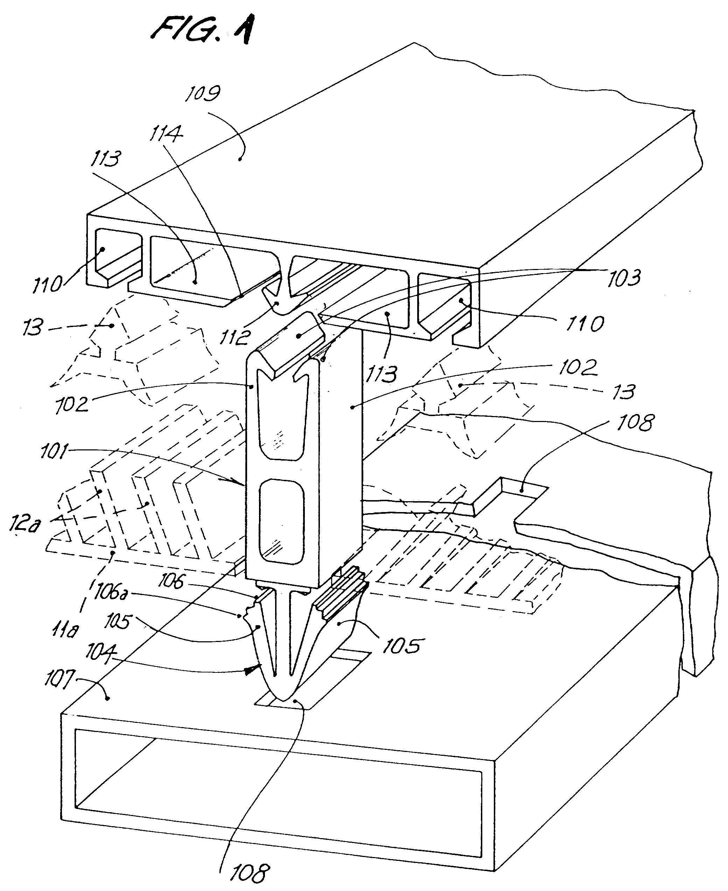

The version of the structure object of the invention shown in figures 1 to 5 of the drawings includes a securing piece of general reference -101-, provided at its upper end with a pair of lugs -102- whose ends have fins -103-, said lugs having the necessary elasticity to make them tend to close against each other.

The lower end of the piece -101- presents a securing jut -104- in the form of an arrowhead, with elastic wings -105- which tend to remain separate, provided at their respective terminal edges with a stepped structure forming two or more seats -106, 106a- at different levels.

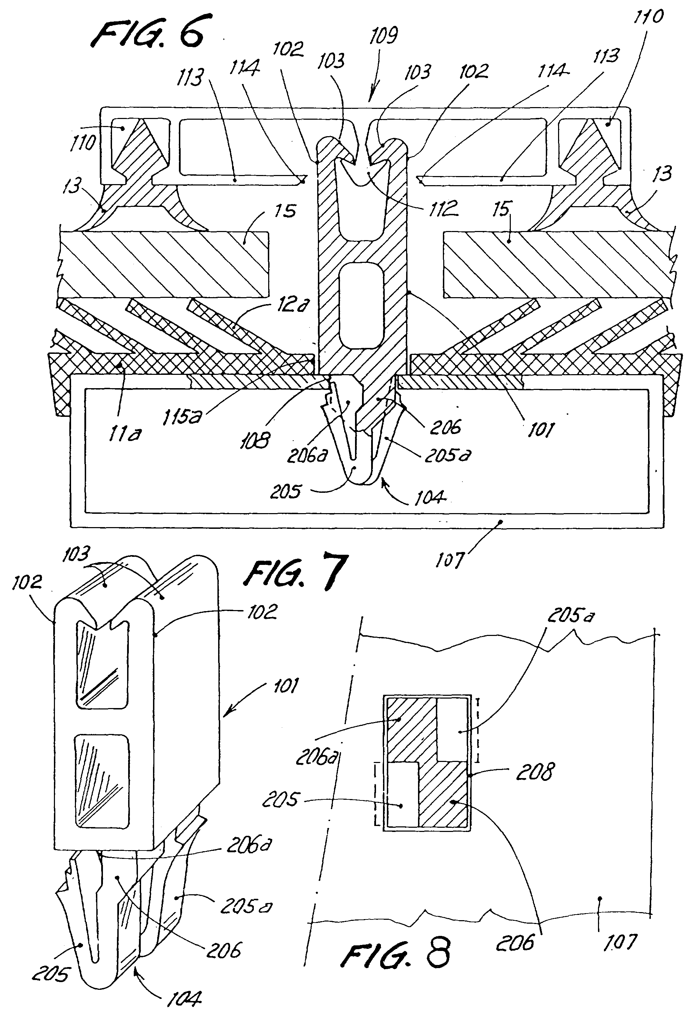

Also forming part of the features of the invention is a rib -107-, formed by a tubular member of rectangular cross section, provided with a set of openings -108- arranged in a row on the upper side, according to the working position, in which are fit under pressure the arrowhead juts -104-, whose wings -105- yield sufficiently to pass through the outline of the opening, the terminal edges being thus secured. According to the thickness of the upper side of the rib -107- the jut -104- will have one or another of the seats -106, 106a- resting on the edges of the opening -108- (figures 4 and 5).

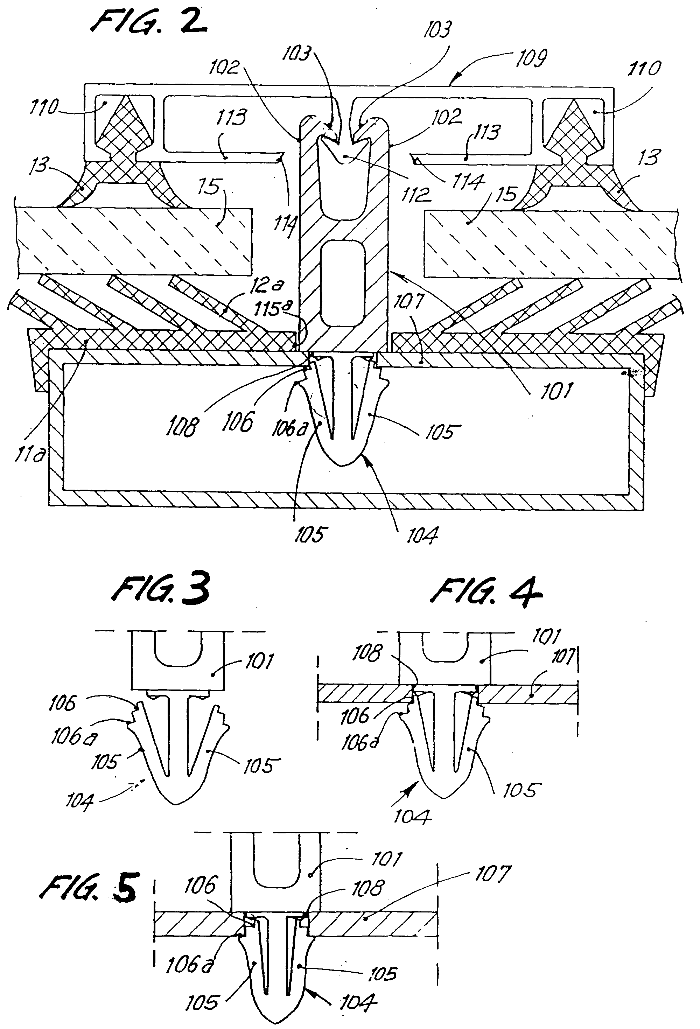

Another special feature of the structure shown in figures 1 to 5 relates to an upper member -109- which constitutes the cover securing the piece -101-. This member presents lateral boxes -110-, inside which are secured seals -13- of a known type (see figures 3 and 5). The member is provided with an arrowhead projection -112-, intended for securing the fins -103- of the piece -101- (figure 2).

This upper member -109- has the special feature of its lower side being open at its central part, with two wings -113- having bevelled edges -114-. These wings -113- prevent the member from accidentally slotting together when they are gathered for transportation or warehousing, as occurs with the members used in previous embodiments. At the same time, the bevelled edges -114- guide the wings -102- of the piece -101- to facilitate securing by feel-fit of the fins -103-, which are hidden from the assemblers' view, in the arrowhead projection -112-.

The structure is completed by an elastic member -11a- having inclined tabs -12- and openings -115a- coinciding with the openings -108- of the rib -107-, and being arranged on the upper side of said rib -107-, against which rest plates -15- forming the roof.

The version of the structure shown in figures 1 to 5 of the drawings provides the following advantages.

Facility in the securing of the piece -101- in the openings -8- of the rib -107-, since an axial movement of the piece is enough, without the need to turn the piece. Moreover, the same piece adapts to ribs -107- of different wall thicknesses (figures 4 and 5).

Possibility of bending or curving the rib -107- without deforming it, due to replacement of the continuous longitudinal opening of previous embodiments by spaced apart openings -108-. For the same reason the rib -107- is stronger than the known members used in known roof support structures.

The wings -113- of the cover-like member -109- prevent batches of shapes from slotting accidentally into one another. At the same time, the bevelled edges -114- guide the lugs -102- to aid their slotting into the projection -112-, since the whole system is hidden by the cover -109-.

Figures 6 to 12 show a version of the structure object of the invention with some differences in relation to the embodiment shown in figures 1 to 5, especially regarding the securing pieces of general reference -101-.

The lower end of the pieces -101- presents a securing jut -104- in the form of an arrowhead, with elastic wings -205, 205a-, set laterally out of line with each other and oriented in opposite directions, which tend to remain separate, emerging from extensions -206, 206a- (figures 6 to 8).

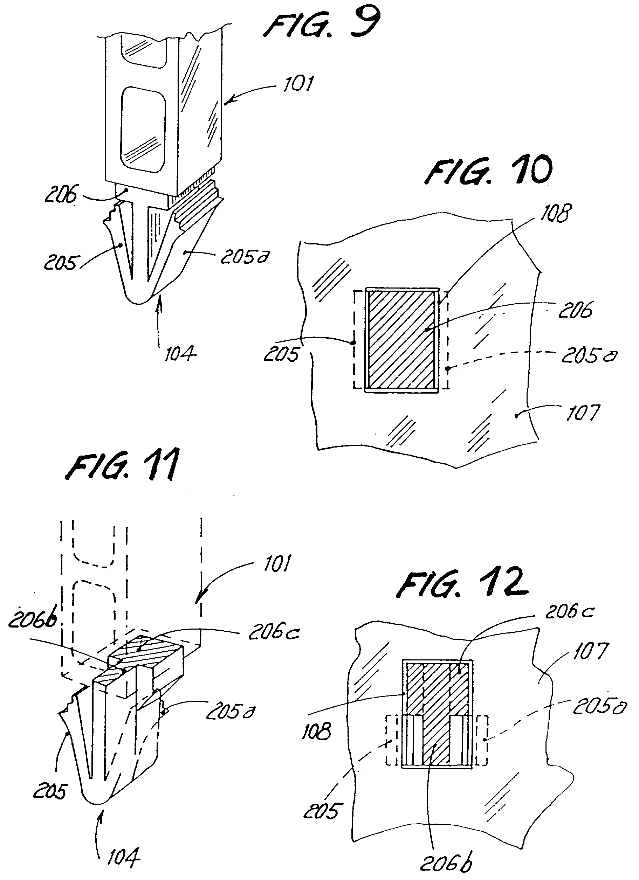

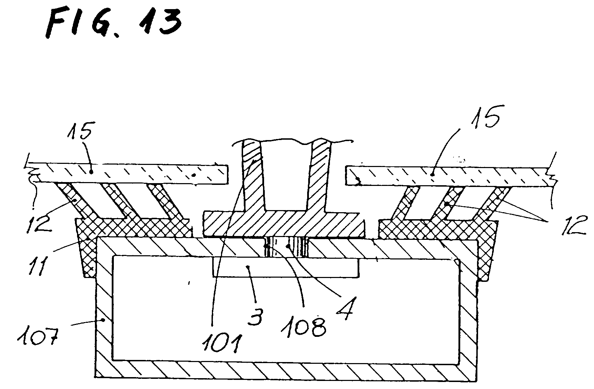

It is possible for the jut -104- to present a single prismatic extension -206-, from which there emerge two symmetrical tabs -205, 205a- (figures 12 and 13), but this embodiment responds to the same principles as that described in the previous paragraph.

The jut -104- has also been designed to present an extension with a narrow section -206b- and another wider one -206c-, the latter of a width corresponding to that of the openings -108- of the rib -107-. From the section -206b- there emerge the symmetrical tabs -205, 205a- (figures 11 and 12).

The extensions -206, 206a, 206b, 206c- fit into the openings -108- of the rib-like member -107-, in any of the versions of the securing juts -104-, i.e.: with two extensions -206, 206a- provided with tabs -205, 205a- set out of line with each other (figures 9 to 11); with a single extension -206- provided with two symmetrical tabs (figures 12 and 13); or with extensions -206b, 206c- of different widths, with tabs -205, 205a- projecting from the extension -206b-. In all cases the securing jut -104- prevents any lateral movement or rotation of the piece -101-, once inserted into the corresponding opening -108- of the rib -107-, even if they undergo lateral pressures, torsion stresses or any other type of stress. The safety of the securing is not affected either by the irregularities which might exist on the edges of the openings -108-, thanks to the extensions -206, 206a, 206c- slotted into the openings -108-.

The structure for the watertight assembly of plates on roofs and the like object of the present invention, according to a version shown in figure 13 comprises a securing device with a jut -3- and a neck -4- which forms lateral recesses, to facilitate securing thereof in a longitudinal opening -5- formed in the upper side of a tubular member -107- by means of a 90° turning of the piece -1-, said tubular member constituting a support rib of the structure.

## Claims

1. Structure for the watertight assembly of plates on roofs and the like, which comprises members in the form of ribs (107) and upper members (109) in the form of covers, between which are trapped the edges of plates (15) with interposition of watertight seals (11-12,13), the ribs and the cover-like members being held together by means of securing pieces (101), the securing pieces (101) being provided with wings (102) that tend to remain close to each other and having fins (103) oriented in opposite directions towards each other, and the lower side of the cover-like members being provided with at least one projecting tab (112) having longitudinal projections on both sides of the free edge, on which are secured said fins (103), characterized in that the longitudinal projections on both sides of the free edge of said tab (112) are such that their upper surfaces form an acute angle with the projecting tab, and the lower surfaces of said fins (103) form an acute angle with said wings (102) and engage a substantial portion of said upper surfaces of the longitudinal projections; and in that at least one of said seals (11-12,13) is capable of an elastic deformation allowing the insertion of the tab (112) between the wings (102) and the subsequent elastic gripping of the panels between said ribs (107) and upper members (109).

2. Structure as claimed in claim 1, characterized in that the upper side of each rib-like member (107) is provided with a plurality of aligned openings (108), for securing therein the pieces (101) which link the ribs (107) and the upper members (109).

3. Structure as claimed in claim 2, characterized in that said securing pieces (101) are provided with a lower arrowhead jut (104) with elastic wings (105), which fit under pressure into said openings (108).

4. Structure as claimed in claim 3, characterized in that the terminal edge of the elastic wings (105) of the jut (104) presents several seats (106,106a) at different levels which rest, selectively, against the lower side of the edge of the openings (108) of the ribs (107).

5. Structure as claimed in claims 1 and 2, characterized in that said securing pieces (101) are provided with a downward projecting neck (4) and a flat jut (3) that can be inserted into said openings (108) of the rib (107) and secured by means of a 90° turn.

6. Structure as claimed in claim 1, characterized in that said upper members (109) are provided at their lower side with coplanar wings (113) which substantially close them, these wings being spaced apart from each other in order to permit the access of the securing pieces (101) up to the projecting tab (112).

7. Structure as claimed in claim 6, characterized in that the facing edges of the wings (113) arranged on the lower side of the upper members (109) are bevelled and oriented towards the projecting tab (112).

8. Structure as claimed in claim 3, characterized in that the securing piece (101) is provided with elastic wings (205,205a) emerging from at least one extension (206) which projects downwardly from the securing piece (101), the cross section of said extension (206) having overall dimensions corresponding to those of the openings (108), so that this extension fits into the corresponding opening and holds the jut (104) both from lateral movement and turning around its axis.

9. Structure as claimed in claim 8, characterized in that the elastic wings (205,205a) and two such lower extensions (206, 206a) of the jut (104) are out of line with each other laterally.

10. Structure as claimed in claim 8, characterized in that the lower extension of the jut (104) has a cross section which comprises two parts (206b,206c) of different width, the narrower part (206) thereof bearing the elastic wings (205,205a) and the wider part (206c) thereof having a width corresponding to that of the opening (108) into which the jut (104) slots.

## Patentansprüche

1. Aufbau für eine wasserdichte Anordnung von Platten auf Dächern oder dergleichen mit Bestandteilen in Form von Rippen (107) und oberen Bestandteilen (109) in Form von Abdeckungen, zwischen denen die Ränder von Platten (15) unter Zwischenanordnung von wasserdichten Dichtungen (11-12, 13) eingeschlossen sind, wobei die Rippen und die abdeckungsähnlichen Bestandteile mittels Befestigungsteilen (101) zusammengehalten sind, wobei die Befestigungsteile (101) mit Flügeln (102) versehen sind, die dicht zueinander zu verbleiben trachten und gegenüberliegend zueinander gerichtete flossenähnliche Vorsprünge (103) besitzten, und wobei die untere Seite der abdeckungsähnlichen Bestandteile mit wenigstens einem vorstehenden Lappen (112) versehen ist, der Längsanformungen an beiden Seiten des freien Endes besitzt, auf denen die flossenähnlichen Vorsprünge (103) befestigt sind,
dadurch gekennzeichnet,
daß die Längsanformungen an beiden Seiten des freien Endes des Lappens (112) derart ausgebildet sind, daß ihre oberen Flächen einen spitzen Winkel mit dem vorstehenden Lappen bilden, und daß die unteren Flächen der flossenähnlichen Vorsprünge (103) einen spitzen Winkel mit den Flügeln (102) bilden und mit einem wesentlichen Abschnitt der oberen Flächen der Längsanformungen in Eingriff sind, und daß wenigstens eine der Dichtungen (11-12, 13) für das Einsetzen des Lappens (112) zwischen die Flügel (102) und das daran anschließende elastische Greifen der Platten zwischen die Rippen (107) und den oberen Bestandteilen (109) elastisch verformbar ist.

2. Aufbau nach Anspruch 1,
dadurch gekennzeichnet,
daß die obere Seite jedes rippenförmigen Bestandteils (107) mit zahlreichen ausgerichteten Öffnungen (108) versehen ist, in denen die Teile (101) befestigbar sind, die die Rippen (107) und die oberen Bestandteile (109) verbinden.

3. Aufbau nach Anspruch 2,
dadurch gekennzeichnet,
daß die befestigenden Teile (101) mit einer unteren pfeilkopfförmigen Vorkragung (104) mit elastischen Flügeln (105) versehen sind, welche unter Druck in den Öffnungen (108) sitzen.

4. Aufbau nach Anspruch 3,
dadurch gekennzeichnet,
daß der Endrand der elastischen Flügel (105) der Vorkragung (104) zahlreiche Sitze (106, 106a) an unterschiedlichen Höhen aufweist, die wahlweise gegen die untere Seite des Randes der Öffnung (108) der Rippen (107) ruhen.

5. Aufbau nach Anspruch 1 und 2,
dadurch gekennzeichnet,
daß die befestigenden Teile (101) mit einem nach unten vorstehenden Hals (4) und einer flachen Vorkragung (3) versehen sind, die in die Öffnungen (108) der Rippe (107) einsetzbar und mittels einer 90°-Drehung befestigbar ist.

6. Aufbau nach Anspruch 1,
dadurch gekennzeichnet,
daß die oberen Bestandteile (109) an ihrer unteren Seite mit in einer Ebene liegenden Flügeln (113) versehen sind, welche diese im wesentlichen schließen, wobei diese Flügel voneinander beabstandet sind, um den Zugang der befestigenden Teile (101) bis zu dem vorstehenden Lappen (112) zu erlauben.

7. Aufbau nach Anspruch 6,
dadurch gekennzeichnet,
daß die vorderen Ränder der Flügel (113), die an der unteren Seite der oberen Bestandteile (109) angeordnet sind, angeschrägt und zu dem vorstehenden Lappen (112) orientiert sind.

8. Aufbau nach Anspruch 3,
dadurch gekennzeichnet,
daß das befestigende Teil (101) mit elastischen Flügeln (205, 205a) versehen ist, die von wenigstens einem Fortsatz (206) hervortreten, der von den befestigenden Teilen (101) nach unten vorsteht, wobei der Querschnitt des Fortsatzes (206) Gesamtabmessungen besitzt, die denen der Öffnungen (108) entspricht, so daß diese Fortsatz in die entsprechende Öffnung paßt und die Vorkragung (104) sowohl an einer seitlichen Bewegung als auch an einem Drehen um ihre Achse hindernd hält.

9. Aufbau nach Anspruch 8,
dadurch gekennzeichnet,
daß die elastischen Flügel (205, 205a) und zwei derartiger unterer Fortsätze (206, 206a) der Vorkragung (104) seitlich nicht miteinander fluchten.

10. Aufbau nach Anspruch 8,
dadurch gekennzeichnet,
daß der untere Fortsatz der Vorkragung (104) einen Querschnitt besitzt, der zwei Abschnitte (206b, 206c) unterschiedlicher Breite aufweist, deren schmalerer Abschnitt (206) die elastischen Flügel (205, 205a) trägt und deren breiterer Abschnitt (206c) eine Breite besitzt, die der der Öffnung (108) entspricht, in die die Vorkragung (104) senkrecht stößt.

## Revendications

1. Structure pour l'assemblage étanche de plaques sur un toit ou similaire, comprenant des organes en forme de nervures (107) et des organes supérieurs (109) en forme de couvercles, entre lesquels sont pris les bords de plaques (15) avec interposition de joints d'étanchéité (11-12,13), les organes formant nervures et couvercles étant maintenus ensemble au moyen de pièces de fixation (101), les pièces de fixation (101) étant munies d'ailes (102) qui ont tendance à demeurer proches les unes des autres et qui comportent des ailettes (103) orientées suivant des directions opposées l'une vers l'autre, et le côté inférieur des organes formant couvercles étant muni d'au moins une patte saillante (112) comportant des saillies longitudinales sur chacun des côtés du bord libre, sur lesquelles sont fixées les ailettes (103), caractérisée en ce que les saillies longitudinales sur chacun des côtés du bord libre de la patte (112) sont faites de telle façon que leurs surfaces supérieures forment un angle aigu avec la patte saillante, et les surfaces inférieures de ces ailettes (103) forment un angle aigu avec les ailes (102) et coopèrent avec une partie substantielle des surfaces supérieures des saillies longitudinales ; et en ce que, au moins un des joints (11-12,13) est susceptible de se déformer élastiquement pour permettre l'insertion de la patte (112) entre les ailes (102) et un accrochage élastique subséquent des panneaux entre les nervures (107) et les organes supérieurs (109).

2. Structure selon la revendication 1, caractérisée en ce que le côté supérieur de chaque organe formant nervures (107) est muni d'une pluralité d'ouvertures alignées (108) pour fixer sur celui-ci les pièces (101) qui lient les nervures (107) et les organes supérieurs (109).

3. Structure selon la revendication 2, caractérisée en ce que les pièces de fixation (101) sont munies d'une saillie (104) en tête de flèche comportant des ailes élastiques (105) qui se logent par pression dans les ouvertures (108).

4. Structure selon la revendication 3, caractérisée en ce que le bord terminal des ailes élastiques (105) de la saillie (104) présente plusieurs sièges (106,106a) à différents niveaux qui s'appuient, sélectivement, contre le côté inférieur du bord des ouvertures (108) des nervures (107).

5. Structure selon la revendication 1 ou 2, caractérisée en ce que les pièces de fixation (101) sont munies d'un col (4) faisant saillie vers le bas et d'une saillie plate (3) qui peut être insérée dans les ouvertures (108) de la nervure (107) et fixée au moyen d'une rotation de 90°.

6. Structure selon la revendication 1, caractérisée en ce que les organes supérieurs (109) sont munis, à leur côté inférieur, d'ailes coplanaires (113) qui les ferment substantiellement, ces ailes étant espacées l'une de l'autre de manière permettre l'accès des pièces de fixation (101) jusqu'à la patte saillante (112).

7. Structure selon la revendication 6, caractérisée en ce que les bords se faisant face des ailes (113) agencées dans le côté inférieur des organes supérieurs (109) sont biseautés et orientés vers la patte saillante (112).

8. Structure selon la revendication 3, caractérisée en ce que la pièce de fixation (101) est munie d'ailes élastiques (205,205a) émergeant à partir d'au moins un prolongement (206) qui fait saillie vers le bas à partir de la pièce de fixation (101), la section transversale de ce prolongement (206) présentant des dimensions totales correspondant à celles des ouvertures (108), si bien que ce prolongement se loge dans l'ouverture correspondante et maintient la saillie (104) en empêchant à la fois le mouvement latéral et la rotation autour de son axe.

9. Structure selon la revendication 8, caractérisée en ce que les ailes élastiques (205,205a) et deux de tels prolongements (206,206a) de la saillie (104) sont décalés l'un de l'autre latéralement.

10. Structure selon la revendication 8, caractérisée en ce que le prolongement inférieur de la saillie (104) présente une section transversale comprenant deux parties (206b,206c) de différentes largeurs, la partie la plus étroite (206) de celle-ci portant les ailes élastiques (205,205a) et la partie la plus large (206c) de celle-ci comportant une largeur correspondant à celle de l'ouverture (108) dans laquelle la saillie (104) s'engage.
